# EUROPEAN PATENT APPLICATION

(11) **EP 2 927 533 A1**
(43) Date of publication of application: **07.10.2015**
(21) Application number: 15162025.9
(22) Date of filing: 31.03.2015
(51) Int. Cl.: F16F 9/54

(54) **Gas cylinder actuator assembly with collar for fixing to a support, gas cylinder actuator for such assembly and collar for fixing the cylindrical body of such gas cylinder actuator to a support**

(30) Priority: 02.04.2014 IT PD20140084
(71) Applicant: Special Springs S.r.l., 36060 Romano d'Ezzelino (VI) (IT)
(72) Inventor: Capeller, Augusto, 36061 Bassano del Grappa, VI (IT); Capeller, Alessandro, 36056 Tezze sul Brenta, VI (IT); Capeller, Dante, 36050 Cartigliano, VI (IT)
(74) Representative: Modiano, Micaela Nadia

(57) **Abstract**

A gas cylinder actuator assembly (10) with a collar (14) for fixing to a support, comprising a gas cylinder actuator (11) with a cylindrical body (12) for gas containment, and with an internal piston and protruding stem (13), the gas cylinder actuator assembly (10) comprising furthermore
- a fixing collar (14) for supporting the cylindrical body (12),
- means for locking the collar (14) to the cylindrical body (12), which comprise an annular element (23) to be arranged so as to surround the cylindrical body (12), the annular element (23) being insertable partly in a corresponding circumferential groove (24) defined on the cylindrical body (12) and partly in a circumferential groove (25) defined at the inner surface (17) of the collar (14),
- the collar (14) comprising two annular portions (27, 28), which face each other axially and are fixed to each other, respective tracks being defined at the facing inner edges (29, 30) of the annular portions (27, 28) and defining the circumferential groove (25) when juxtaposed.

The gas cylinder actuator assembly (10) comprises rotation-preventing means (16) that are configured to prevent the rotation of the cylindrical body (12) with respect to the collar (14) when the collar (14) is assembled thereto.

## Description

The present invention relates to a gas cylinder actuator assembly with collar for fixing to a support, a gas cylinder actuator for such assembly and a collar for fixing the cylindrical body of such gas cylinder actuator to a support.

Nowadays the use is known and widespread of gas cylinder actuators, for example for press-molding operations, which are mounted suspended to a support, for example a plate, or fixed to such plate by way of the sleeve of the gas containment body, with the opposite end to the stem which is free from constraints.

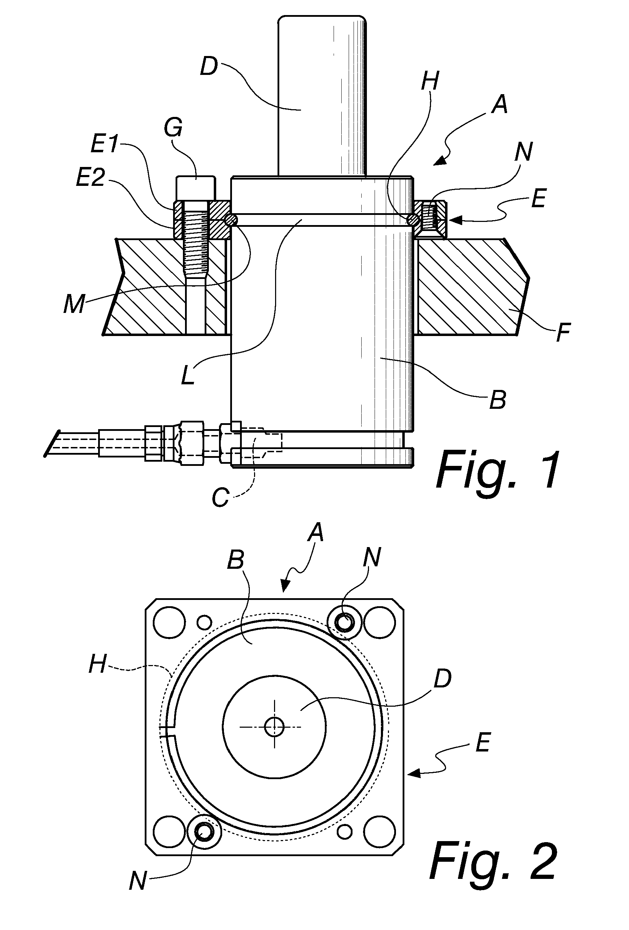

Such a conventional gas cylinder actuator A is shown for the purposes of example in Figures 1 and 2, and comprises
- a gas containment body B, with a connector C for filling with gas from a filling system, not shown for the sake of simplicity, and a stem-piston D,
- and a collar E, for supporting the gas containment body B,
- means being provided for locking of the collar E to the gas containment body B.

The collar E is adapted to then be fixed to a plate F, for example by way of screws G.

The means for locking the collar E to the gas containment body B are constituted, for example, by an annular element H arranged so as to surround the gas containment body B, such annular element H being inserted partly in a corresponding first, outer perimetric groove L defined on the containment body gas B and partly in a second, inner perimetric groove M defined at the inner surface of the collar E.

Such annular element H, made for example from metallic wire, prevents the movement of the gas containment body B with respect to the collar E, and thus with respect to the plate F, in the direction of the main axis of the gas containment body B.

The annular element H is closed between two annular portions E1 and E2 which when overlapped form the collar E, at the facing inner edges of such annular portions E1 and E2 there being respective tracks that, when side-by-side, define the second perimetric groove M.

The two annular portions E1 and E2 are clamped to each other by way of screws N.

Such means for locking the collar E to the gas containment body B, although widespread, suffer a major drawback, which is constituted by the fact that, no matter how hard they clamp the two annular portions E1 and E2 of the collar E on the annular element H, by way of the screws N and G, they are not capable of preventing the rotation of the gas containment body B about its own main axis.

In fact the vibrations that the gas containment body B is subjected to during the operation of a press with which the gas cylinder actuator A is associated, cause the loosening of the screws, both the screws N that couple the two annular portions E1 and E2, and the screws G that couple the collar E to the supporting plate F, with consequent ability of the gas containment body B to rotate; such rotation entails an undue stress of the gas transfer tube, when present, which is usually connected to the bottom of the gas containment body B, as well as of the corresponding connectors.

The rotation of the gas containment body B in fact causes the winding of the tube connected thereto around the containment body, with consequent traction of the tube, and risk of damage with the escape of gas and emptying of the entire system of which the gas cylinder actuator is part.

The aim of the present invention is to provide a gas cylinder actuator assembly with a collar for fixing to a support, which is capable of overcoming the above mentioned drawback.

Within this aim, an object of the invention is to provide a gas cylinder actuator assembly with a collar for fixing to a support, in which the gas containment body does not rotate with respect to the fixing collar.

Another object of the invention is to provide a gas cylinder actuator assembly that is easy to mount in the manner of conventional gas cylinder actuators.

Another object of the invention is to provide a gas cylinder actuator assembly that makes it possible to protect the integrity of a tube connected thereto and of the corresponding connector.

Another object of the invention is to provide a gas cylinder actuator assembly that makes it possible to provide systems of gas cylinder actuators connected in parallel which are fully safe and reliable.

Another object of the invention is to provide a gas cylinder actuator for such gas cylinder actuator assembly and a collar for such gas cylinder actuator assembly.

This aim and these and other objects which will become better evident hereinafter are achieved by a gas cylinder actuator assembly with a collar for fixing to a support, comprising a gas cylinder actuator with a cylindrical body for gas containment, and with an internal piston and protruding stem, said gas cylinder actuator assembly comprising furthermore
- a fixing collar, for supporting the cylindrical body,
- means for locking the fixing collar to the cylindrical body, which comprise an annular element to be arranged so as to surround the cylindrical body, said annular element being insertable partly in a corresponding circumferential groove, defined on the cylindrical body, and partly in a circumferential groove, defined at the inner surface of the fixing collar,
- said collar comprising two annular portions, which face each other axially and are fixed to each other, respective tracks being defined at the facing inner edges of said annular portions and defining said circumferential groove when juxtaposed,
said gas cylinder actuator assembly being characterized in that it comprises rotation-preventing means, which are configured to prevent the rotation of said cylindrical body with respect to said fixing collar when said collar is assembled to it.

Further characteristics and advantages of the invention will become better apparent from the description of a preferred, but not exclusive, embodiment of the gas cylinder actuator assembly according to the invention, which is illustrated by way of non-limiting example in the accompanying drawings wherein:
- Figure 1 is a partially sectional side view of a conventional gas cylinder actuator assembly;
- Figure 2 is a view from above of the conventional gas cylinder actuator assembly in Figure 1;

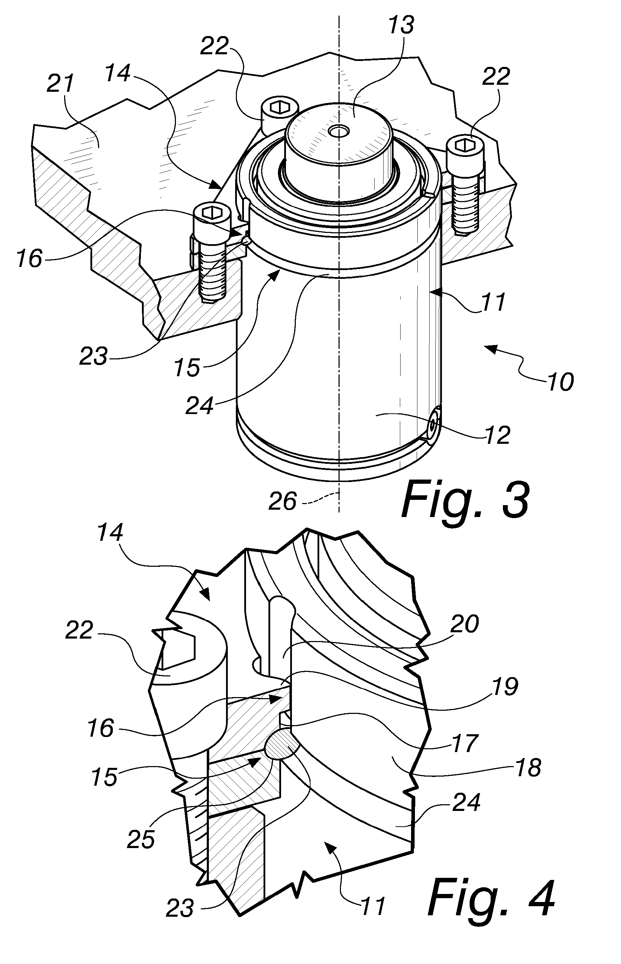

- Figure 3 is a perspective view of a gas cylinder actuator assembly according to the invention;
- Figure 4 is a detail of Figure 3;

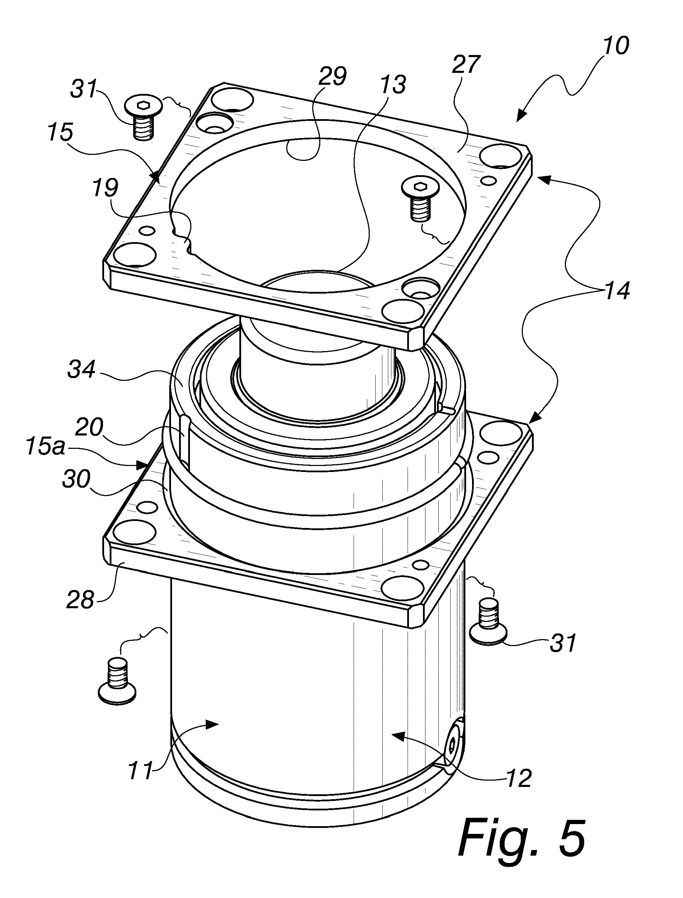

- Figure 5 is an exploded perspective view of the gas cylinder actuator assembly according to the invention;
- Figure 6 is a cutaway perspective view of a variation of embodiment of a gas cylinder actuator assembly according to the invention.

With reference to the figures, a gas cylinder actuator assembly according to the invention is generally designated with the reference numeral 10.

The gas cylinder actuator assembly 10 with a collar 14 for fixing to a support, for example a plate 21, comprises a gas cylinder actuator 11 with a cylindrical body 12, for gas containment, and with an internal piston and protruding stem 13; the gas cylinder actuator assembly 10 also comprises
- a fixing collar 14, for supporting the cylindrical body 12,
- means for locking the fixing collar 14 to the cylindrical body 12, which comprise in turn an annular element 23 to be arranged so as to surround the cylindrical body 12; the annular element 23 is insertable partly in a corresponding circumferential groove 24 defined on the cylindrical body 12, and partially in a circumferential groove 25 defined at the inner surface 17 of the collar 14; the annular element 23 is made for example of metallic wire;
- the fixing collar 14 comprises two annular portions 27 and 28, which face each other axially and are fixed to each other; at the facing inner edges 29 and 30 of the annular portions 27 and 28 there are respective tracks which, when juxtaposed, define the circumferential groove 25.

The gas cylinder actuator assembly 10 according to the invention comprises rotation-preventing means 16 that are configured to prevent the rotation of the cylindrical body 12 with respect to the fixing collar 14 when the fixing collar 14 is assembled thereto.

In the present embodiment, described herein by way of non-limiting example of the invention, the rotation-preventing means 16 comprise a radially extended rotation-preventing portion 15, selected from
- at least one raised portion that protrudes radially from the inner surface 17 of the fixing collar 14,
- and at least one groove that is recessed radially from the outer surface 18 of the cylindrical body 12.

The radially extended rotation-preventing portion 15 is adapted to cooperate, when the cylindrical body 12 is assembled to the collar 14, with a corresponding complementarily shaped radially extended rotation-preventing portion 15a which is defined on said cylindrical body 12.

In particular, in the present embodiment the rotation-preventing means 16 comprise
- a radially extended rotation-preventing portion 15 that comprises a raised portion 19 that protrudes radially from the inner surface 17 of the collar 14,
- a complementarily shaped radially extended rotation-preventing portion 15a, which comprises a recess 20 that is provided correspondingly on the outer surface 18 of the cylindrical body 12.

The recess 20 extends between the circumferential groove 24 on the cylindrical body 12 and the outer circumferential edge 34 of one end of the cylindrical body 12, so as to allow the coupling of the cylindrical body 12 with the collar 14 in the direction of the main axis of the cylindrical body 12.

The two annular portions 27 and 28 are each constituted by a perforated plate, and are clamped to each other by way of screws 31.

The fixing collar 14 is adapted in turn to be fixed to a supporting plate 21 for example by way of screws 22, such screws 22 contributing to clamping the annular portions 27 and 28 together.

Once the gas cylinder actuator assembly 10 is assembled, the annular element 23 prevents the movement of the cylindrical body 12 with respect to the fixing collar 14, and thus with respect to the supporting plate 21, in the direction of the main axis 26 of the gas cylinder actuator 11, and, simultaneously, the coupling of the raised portion 19 with the recess 20 prevents the rotation between the cylindrical body 12 and the fixing collar 14 and thus the rotation of the gas cylinder actuator 11 with respect to the supporting plate 21 to which the fixing collar 14 is in turn fixed.

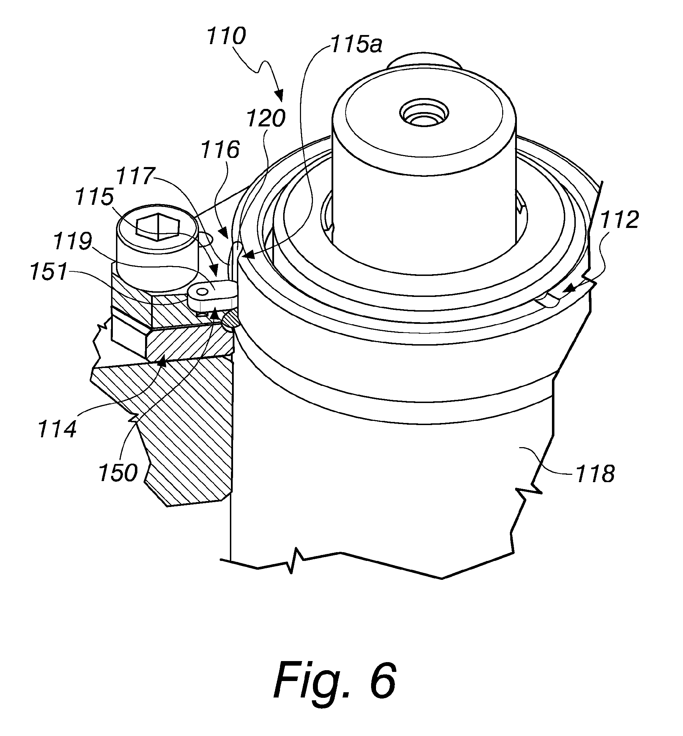

In a variation of embodiment thereof, shown in Figure 6, the gas cylinder actuator assembly 110 according to the invention is provided with rotation-preventing means 116 which comprise
- a radially extended rotation-preventing portion 115 that comprises a raised portion 119 that protrudes radially from the inner surface 117 of the collar 114,
- a complementarily shaped radially extended rotation-preventing portion 115a, which comprises a recess 120 that is provided correspondingly on the outer surface 118 of the cylindrical body 112.

In such variation of embodiment the raised portion 119 is part of a rotation-preventing key 150 that is preset to be inserted partly in the recess 120 and partly in a seat 151 that is defined in the collar 114 and is open in a radial direction on the recess 120.

The assembly of the actuator structure 110 involves firstly the connection of the collar 114 and of the gas cylinder actuator 111 and secondly the insertion of the rotation-preventing key 150, once the recess 120 on the cylindrical body 112 and the seat 151 on the collar 114 are facing each other radially.

The invention also relates to a gas cylinder actuator 11, for a gas cylinder actuator assembly 10 as described above.

The gas cylinder actuator 10 comprises
- a cylindrical body 12 with a stem-piston 13,
- an outer circumferential groove 24 defined on the cylindrical body 12,
and also comprises a radially extended rotation-preventing portion 15a on the outer surface 18 of the cylindrical body 12, which is adapted to cooperate with a corresponding radially extended rotation-preventing portion 15 defined on the inner surface 17 of the fixing collar 14.

The radially extended rotation-preventing portion 15a on the outer surface 18 of the cylindrical body 12 is constituted by a recess 20.

In particular, the recess 20 extends between the circumferential groove 24 and the outer circumferential edge 34 of one end of the cylindrical body 12.

The invention also relates to a fixing collar 14 for a gas cylinder actuator assembly 10 as described above.

The fixing collar 14 comprises two annular portions 27 and 28 which are superimposed and fixed to each other; at the facing inner edges 29 and 30 of the annular portions 27 and 28 there are respective tracks that, when juxtaposed, define a circumferential groove 25.

The fixing collar 14 is characterized in that it comprises a radially extended rotation-preventing portion 15 that is defined on the inner surface 17 of the collar 14, and is adapted to cooperate with a corresponding radially extended rotation-preventing portion 15a defined on the outer surface 18 of the cylindrical body 12.

The radially extended rotation-preventing portion 15 is constituted by a raised portion 19 that protrudes radially from the inner surface 17 of the collar 14.

In practice it has been found that the invention fully achieves the intended aim and objects.

In particular with the invention a gas cylinder actuator assembly has been devised in which the cylindrical body of the gas cylinder actuator does not rotate with respect to the collar for supporting, thanks to the rotation-preventing means 16 that prevent the rotation of the cylindrical body 12 with respect to the fixing collar 14 and thus prevent the rotation of the gas cylinder actuator 10 with respect to a supporting plate 21.

Moreover, with the invention a gas cylinder actuator assembly has been devised which is easy to mount in the manner of conventional gas cylinder actuators.

Furthermore, with the invention a gas cylinder actuator assembly has been devised which makes it possible to protect the integrity of a tube connected thereto and of the corresponding connector, a result that follows from the prevented rotation of the cylindrical body 12 and thus from the prevented winding of the gas tube around the cylindrical body 12.

Furthermore, with the invention a gas cylinder actuator assembly has been devised which makes it possible to provide systems of gas cylinder actuators connected in parallel which are fully safe and reliable.

The invention, thus conceived, is susceptible of numerous modifications and variations, all of which are within the scope of the appended claims. Moreover, all the details may be substituted by other, technically equivalent elements.

In practice the components employed, provided they are compatible with the specific use, and the contingent dimensions and shapes, may be any according to requirements and to the state of the art.

The disclosures in Italian Patent Application No. PD2014A000084 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A gas cylinder actuator assembly (10) with a collar (14) for fixing to a support, comprising a gas cylinder actuator (11) with a cylindrical body (12) for gas containment, and with an internal piston and protruding stem (13),
said gas cylinder actuator assembly (10) comprising furthermore
- a fixing collar (14), for supporting the cylindrical body (12),
- means for locking the fixing collar (14) to the cylindrical body (12), which comprise an annular element (23) to be arranged so as to surround the cylindrical body (12), said annular element (23) being insertable partly in a corresponding circumferential groove (24) defined on the cylindrical body (12) and partly in a circumferential groove (25) defined at the inner surface (17) of the fixing collar (14),
- said fixing collar (14) comprising two annular portions (27, 28), which face each other axially and are fixed to each other, respective tracks being defined at the facing inner edges (29, 30) of said annular portions (27, 28) and defining said circumferential groove (25) when juxtaposed,
said gas cylinder actuator assembly (10) being **characterized in that** it comprises rotation-preventing means (16), which are configured to prevent the rotation of said cylindrical body (12) with respect to said fixing collar (14) when said collar (14) is assembled thereto.

2. The gas cylinder actuator assembly according to claim 1, **characterized in that** said rotation-preventing means (16) comprise a radially extended rotation-preventing portion (15), selected from
- at least one raised portion that protrudes radially from the inner surface (17) of said collar (14),
- at least one groove that is recessed radially from the outer surface (18) of the cylindrical body (12), said rotation-preventing portion (15) being adapted to cooperate with a corresponding complementarily shaped radially extended rotation-preventing portion (15a) defined on said cylindrical body (12) when said body is assembled to said collar (14).

3. The gas cylinder actuator assembly according to claim 2, **characterized in that** said rotation-preventing means (16) comprise
- a radially extended rotation-preventing portion (15) that comprises a raised portion (19) that protrudes radially from the inner surface (17) of the collar (14),
- a complementarily shaped radially extended rotation-preventing portion (15a), which comprises a recess (20) that is provided correspondingly on the outer surface (18) of the cylindrical body (12).

4. The gas cylinder actuator assembly according to one or more of the preceding claims, **characterized in that** said recess (20) extends between said circumferential groove (24) on the cylindrical body (12) and the outer circumferential edge (34) of one end of said cylindrical body (12).

5. The gas cylinder actuator assembly according to claims 1 and 2, **characterized in that** it is provided with rotation-preventing means (116), which comprise
- a radially extended rotation-preventing portion (115) that comprises a raised portion (119) that protrudes radially from the inner surface (117) of the collar (114),
- a complementarily shaped radially extended rotation-preventing portion (115a) that comprises a recess (120) that is provided correspondingly on the outer surface (118) of the cylindrical body (112), said raised portion (119) being part of a rotation-preventing key (150) that is preset to be inserted partly in said recess (120) and partly in a seat (151) that is defined in the collar (114) and is open in a radial direction on said recess (120).

6. A gas cylinder actuator (11) for a gas cylinder actuator assembly (10) according to one or more of claims 1 to 5, comprising
- a cylindrical body (12) with a stem-piston (13),
- an outer circumferential groove (24) defined on the cylindrical body (12),
**characterized in that** it comprises a radially extended rotation-preventing portion (15a) on the outer surface (18) of the cylindrical body (12), which is adapted to cooperate with a corresponding radially extended rotation-preventing portion (15) defined on the inner surface (17) of a fixing collar (14).

7. The gas cylinder actuator according to claim 6, **characterized in that** said radially extended rotation-preventing portion (15a) on the outer surface (18) of the cylindrical body (12) comprises a recess (20).

8. The gas cylinder actuator according to claim 7, **characterized in that** said recess (20) extends between said circumferential groove (24) and the outer circumferential edge (34) of one end of said cylindrical body (12).

9. A fixing collar (14) for a gas cylinder actuator assembly (10) according to claims 1 to 5, comprising two annular portions (27, 28) that are superimposed and fixed to each other, at the facing inner edges (29, 30) of said annular portions (27, 28) there being respective tracks which, when juxtaposed, define a circumferential groove (25), said collar (14) being **characterized in that** it comprises a radially extended rotation-preventing portion (15) defined on the inner surface (17) of said collar (14), which is adapted to cooperate with a corresponding radially extended rotation-preventing portion (15a) defined on the outer surface (18) of the cylindrical body (12).

10. The fixing collar according to claim 9, **characterized in that** said radially extended rotation-preventing portion (15) comprises a raised portion (19) that protrudes radially from the inner surface (17) of said collar (14).
